# FASCICULE DE BREVET EUROPEEN

(11) **EP 0 441 723 B1**
(45) Date de publication et mention de la délivrance du brevet: **04.01.1995**
(21) Numéro de dépôt: 91420035.7
(22) Date de dépôt: 04.02.1991
(51) Int. Cl.: H04N 9/64

(54) **Procédé d'identification automatique d'un standard de télévision couleur**
Automatisches Verfahren zur Farbfernsehnormidentifizierung
Automatic colour television standard indentification method

(30) Priorité: 06.02.1990 FR 9001623
(43) Date de publication de la demande: 14.08.1991
(73) Titulaire: SGS-THOMSON MICROELECTRONICS SA, 94250 Gentilly (FR)
(72) Inventeur: Imbert, Michel, F-38500 Coublevie (FR)
(74) Mandataire: de Beaumont, Michel

(56) Documents cités:
- EP-A- 0 162 443
- ELECTRONIC COMPONENTS AND APPLICATIONS. vol. 7, no. 1, 1985, EINDHOVEN NL pages 24 - 36; Andries Smaal: "Single-chip multi-standard colour decoder"

## Description

La présente invention concerne le domaine de la télévision couleur et, plus particulièrement, les circuits de décodage de chrominance dans un téléviseur couleur pouvant recevoir plusieurs standards.

Pour pouvoir décoder un signal vidéo et restituer une image couleur, un téléviseur couleur doit connaître le standard de télévision couleur utilisé à l'émission. Les téléviseurs couleur modernes possèdent un système d'identification automatique de la norme ou du standard de télévision couleur utilisé à l'émission. La présente invention concerne plus spécifiquement un procédé d'identification automatique d'un standard de télévision couleur dans un téléviseur multi-normes.

Actuellement, les standards les plus utilisés de télévision couleur sont les standards PAL, NTSC et SECAM. Pour ces trois standards, chaque ligne du signal vidéo composite comprend un top de synchronisation, une salve de quelques oscillations du signal de la sous-porteuse de chrominance, puis le signal proprement dit correspondant à l'image, comprenant la superposition d'informations de luminance et d'informations de chrominance, ces dernières étant supportées par le signal de luminance.

Les caractéristiques de la sous-porteuse de chrominance dans les différents standards PAL, NTSC et SECAM sont définies dans des documents publiés relatifs à ces standards, et ne seront pas décrites en détail ici. On va toutefois rappeler brièvement les caractéristiques essentielles de ces différents standards parce que ces indications serviront à mieux comprendre l'invention.

Dans le standard PAL, la fréquence de la sous-porteuse de chrominance est la même pour toutes les lignes, mais la phase d'un des vecteurs de modulation varie de + ou - 90° d'une ligne à la suivante. La fréquence de la sous-porteuse de chrominance est normalisée à 4,43 MHz. Dans ce système, le signal de salve est également déphasé de + ou - 90° d'une ligne à la suivante.

Dans le standard NTSC, la sous-porteuse de chrominance est la même pour toutes les lignes.

Dans le standard SECAM, on utilise deux fréquences de sous-porteuse de chrominance qui s'alternent d'une ligne à la suivante, respectivement à 4,25 MHz et 4,40 MHz. Ces deux sous-porteuses de chrominance sont modulées en fréquence.

Les téléviseurs couleur multi-normes doivent posséder en interne des systèmes distincts destinés à décoder les signaux de luminance et de chrominance pour chacun des standards utilisés.

Ces téléviseurs doivent donc préalablement effectuer une identification du standard reçu.

Il existe déjà des systèmes d'identification automatique du standard utilisé. En général, pour effectuer une telle identification automatique du standard, les systèmes connus utilisent les salves du signal de la sous-porteuse de chrominance présentes en début de chaque ligne. En effet, ces salves sont des échantillons normés et calibrés de la sous-porteuse de chrominance transmise sur le signal vidéo et comprennent toutes les informations caractéristiques concernant le standard de couleur transmis. Les informations contenues dans ces salves sont en particulier la fréquence, la phase d'un des vecteurs de modulation et la variation de fréquence ou de phase d'une ligne à la suivante.

Le fait que la fréquence ou la phase d'un des vecteurs de modulation de la sous-porteuse de chrominance varie d'une ligne à la suivante complique le procédé utilisé pour parvenir à l'identification du standard.

Jusqu'à présent, pour pouvoir procéder à une identification correcte d'un standard, il fallait préalablement "mettre en phase" un signal à demi-fréquence ligne par rapport au signal vidéo. Une telle opération de "mise en phase", encore appelée opération de "remise à l'heure", est effectuée en même temps que l'opération d'identification du standard, dans la plupart des systèmes connus actuellement. En effet, les systèmes classiques d'identification d'un standard ont besoin, pour effectuer une identification fiable, de la "mise en phase" du signal à demi-fréquence ligne et, parallèlement, les systèmes de "mise en phase" ne peuvent opérer que si l'on a préalablement identifié le standard. On surmonte actuellement cette difficulté en effectuant des essais successifs d'identification pour chaque standard possible et, pour chacun de ces essais successifs, des essais successifs de "mise en phase" pour chaque standard possible. Dans ce cas, l'identification est dite "bouclée", avec l'opération de "mise en phase" du signal à demi-fréquence ligne. Voir par exemple EP-A- 0 162 443.

Une identification bouclée peut présenter certains aléas de fonctionnement, en particulier sur des signaux de mauvaise qualité.

La présente invention a donc pour objet de proposer un procédé d'identification automatique "non bouclé", c'est-à-dire une identification de standard qui ne nécessite pas d'opération préalable ou simultanée de "mise en phase" du signal à demi-fréquence ligne.

La présente invention concerne donc un procédé d'identification automatique d'un standard de télévision couleur PAL ou NTSC comprenant les étapes consistant à effectuer la démodulation des salves du signal de chrominance par la sous-porteuse régénérée phasée à 90°, par rapport auxdites salves, pour produire un premier signal de démodulation ; effectuer la démodulation des salves du signal de chrominance avec un signal à la fréquence de référence d'une des couleurs du standard SECAM, pour produire un deuxième signal de démodulation ; produire une première tension en intégrant dans le temps le premier signal de démodulation, comparer cette première tension à un premier seuil prédéterminé et produire un premier critère logique prenant un premier état logique si la première tension est inférieure au premier seuil et l'autre état logique dans le cas contraire, appliquer en parallèle le premier signal de démodulation à l'entrée d'un inverseur de polarité commuté à la cadence d'un signal non phasé à la demi-fréquence ligne, produire une deuxième tension en intégrant dans le temps le signal de sortie de l'inverseur de polarité, comparer la valeur absolue de la deuxième tension à un deuxième seuil prédéterminé et produire un deuxième critère logique prenant le premier état logique si la valeur absolue de la deuxième tension est inférieure au deuxième seuil et l'autre état logique dans le cas contraire ; produire de la même façon mais à partir du deuxième signal de démodulation le premier critère logique et le deuxième critère logique ; et identifier le standard reçu comme étant le standard PAL si, à partir du premier signal de démodulation, les premier et deuxième critères logiques prennent respectivement le premier et l'autre état logique, identifier le standard reçu comme étant le standard NTSC si, à partir du premier signal de démodulation, les premier et deuxième critères logiques prennent tous deux le premier état logique et identifier le standard reçu comme étant le standard SECAM si, à partir du deuxième signal de démodulation, les premier et deuxième critères logiques prennent tous deux l'autre état logique.

Selon un aspect de la présente invention, ce procédé comprend aussi les étapes consistant à effectuer la démodulation des salves du signal de chrominance par la sous-porteuse régénérée phasée à 0°, pour produire un troisième signal de démodulation ; effectuer la démodulation des salves du signal de chrominance par un signal à la fréquence de référence de l'autre couleur du standard SECAM, pour produire un quatrième signal de démodulation ; produire à partir du troisième signal de démodulation une troisième tension résultant de l'intégration dans le temps du troisième signal de démodulation, comparer cette troisième tension à un troisième seuil prédéterminé et produire un troisième critère logique prenant le premier état logique si la troisième tension est inférieure au troisième seuil et l'autre état logique dans le cas contraire ; produire de la même façon mais à partir du quatrième signal de démodulation le troisième critère logique ; et identifier le standard reçu comme étant le standard PAL ou NTSC si, à partir du troisième signal de démodulation, le troisième critère logique prend l'autre état logique et identifier le standard reçu comme étant le standard SECAM si, à partir du quatrième signal de démodulation, le troisième critère logique prend l'autre état logique.

Ce procédé peut aussi comprendre les étapes consistant à, dans un premier temps, produire les trois critères logiques à partir des premier et troisième signaux de démodulation, identifier le standard reçu comme étant le standard PAL si les premier, deuxième et troisième critères logiques prennent respectivement le premier état logique, l'autre état logique et l'autre état logique et identifier le standard reçu comme étant le standard NTSC si les premier, deuxième et troisième critères logiques prennent respectivement le premier état logique, le premier état logique et l'autre état logique ; et, dans un deuxième temps, produire les trois critères logiques à partir des deuxième et quatrième signaux de démodulation et identifier le standard reçu comme étant le standard SECAM si les premier, deuxième et troisième critères logiques prennent tous trois l'autre état logique.

Ces objets, caractéristiques et avantages, ainsi que d'autres de la présente invention seront exposés plus en détail dans la description suivante d'un mode de réalisation particulier faite en relation avec les figures jointes parmi lesquelles :
la figure 1 représente schématiquement une première partie d'un dispositif mettant en oeuvre le procédé selon l'invention ;
les figures 2 à 7 sont des diagrammes représentant simultanément l'évolution des différents signaux présents dans un dispositif mettant en oeuvre le procédé selon l'invention, pour chacun des standards pouvant être reçu ;
La figure 8 est un tableau donnant l'état logique de différents signaux en fonction du standard reçu, selon le procédé de l'invention ; et
La figure 9 représente schématiquement l'ensemble du dispositif mettant en oeuvre le procédé selon l'invention.

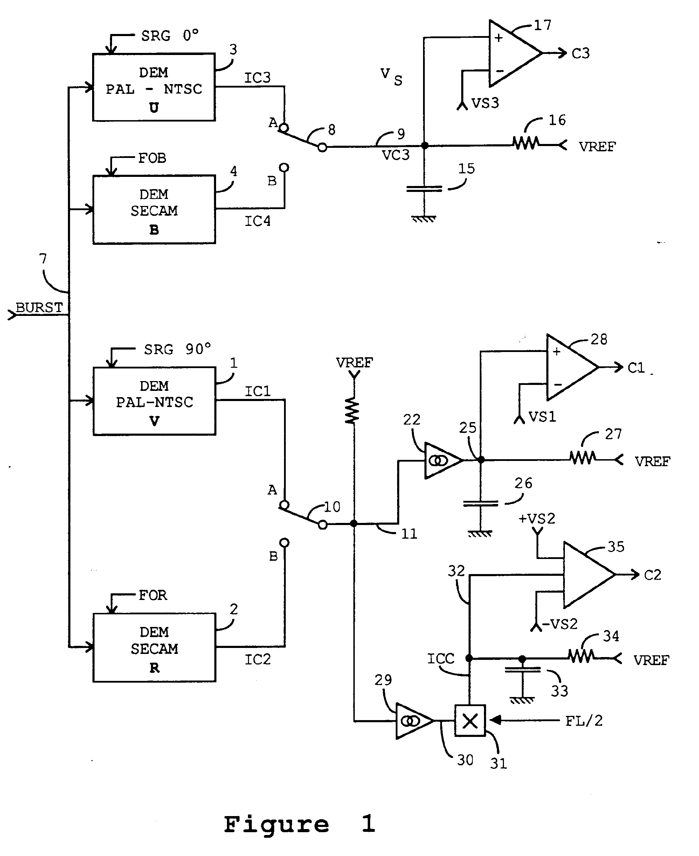

La figure 1 représente un circuit électronique faisant partie d'un dispositif d'identification de standard selon l'invention. Ce circuit d'identification est placé en général dans le téléviseur couleur. On distingue quatre démodulateurs 1 à 4 recevant simultanément en entrée 7 un signal constitué des salves (BURST) successives du signal de chrominance, ces salves étant extraites préalablement du signal vidéo composite délivré dans le téléviseur couleur.

Le procédé d'identification d'un standard selon l'invention permet d'identifier successivement si le signal reçu est de standard PAL, NTSC ou SECAM. Le démodulateur 1, utilisé pour l'identification du standard PAL ou du standard NTSC, reçoit sur sa seconde entrée un signal correspondant à la sous-porteuse régénéréé (SRG) présentant une phase de 90° par rapport à l'axe de modulation du BURST en standard NTSC. Pour générer ce signal, on utilise un moyen (non représenté) pour produire la sous-porteuse régénérée phasée à 90°, par exemple à l'aide d'un circuit à verrouillage de phase. Le démodulateur 1 produit en sortie un signal IC1 qui peut être envoyé dans une ligne 11 par l'intermédiaire d'un commutateur 10. Le signal présent dans la ligne 11 passe à travers un amplificateur de courant 22 dont la sortie est connectée à une ligne 25. La ligne 25 est reliée à la masse par l'intermédiaire d'un condensateur 26 et à une tension de référence VREF par l'intermédiaire d'une résistance 27. De la sorte, le signal VC1 envoyé dans la ligne 25 correspond à une intégration dans le temps du signal sur la ligne 11. La tension VC1 est comparée à une tension de seuil prédéterminée VS1 par un comparateur 28 produisant en sortie un premier signal logique, appelé par la suite premier critère logique C1. Le premier critère logique C1 prend l'état logique 0 quand VC1 est inférieur à VS1 et l'état logique 1 dans le cas contraire.

Le signal sur la ligne 11 est envoyé également dans un amplificateur de courant 29 dont la sortie 30 est reliée à l'entrée d'un inverseur de polarité 31 commandé par un signal à demi-fréquence ligne FL/2 qui n'a pas été préalablement "mis en phase". L'inverseur de polarité 31 produit en sortie un signal ICC envoyé dans une ligne 32. La ligne 32 est reliée à la masse par un condensateur 33 et à une tension de référence par une résistance 34 et il s'établit par conséquent dans la ligne 32 une tension VC2 d'intégration dans le temps du signal ICC. Un comparateur à trois entrées 35 permet de comparer la valeur de la tension VC2 à deux tensions de seuil prédéterminées +VS2, -VS2. Ce comparateur produit en sortie un deuxième signal logique, appelé par la suite deuxième critère logique C2. Ce critère logique C2 prend l'état logique 0 si VC2 est inférieur à +VS2 ou supérieur à -VS2 et l'état logique 1 dans le cas contraire.

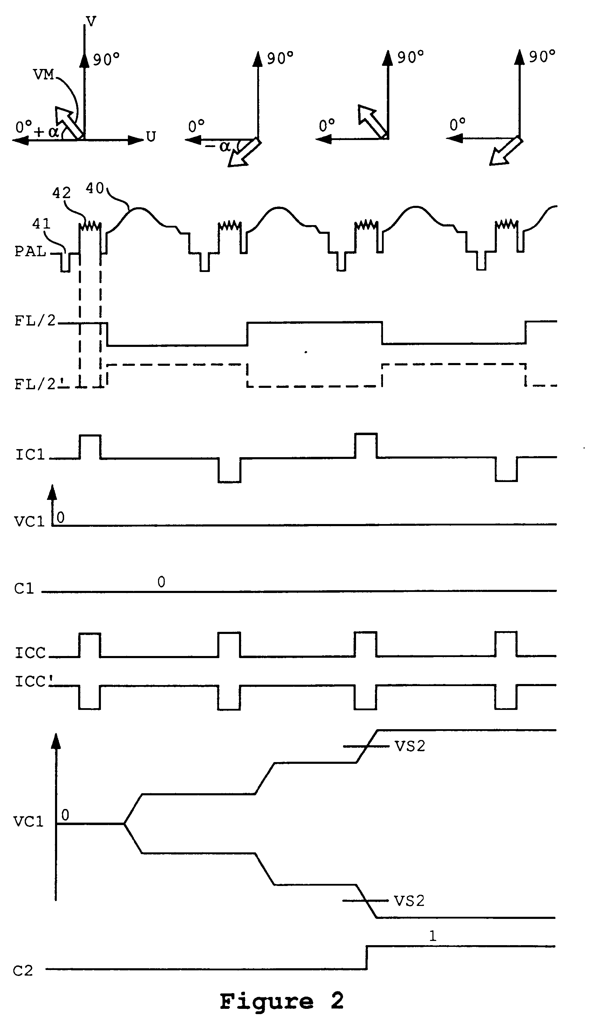

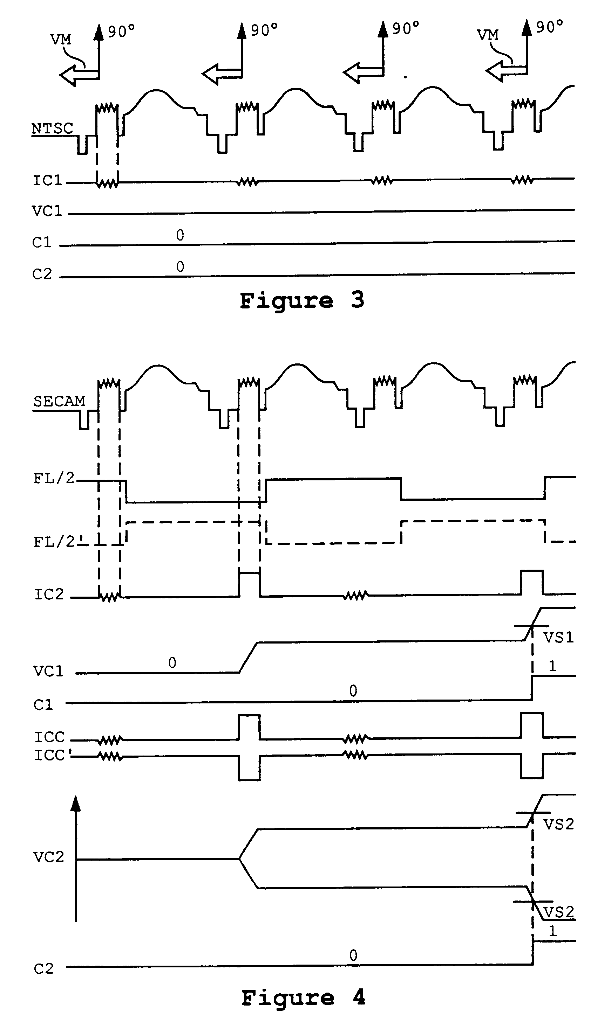

En considérant l'ensemble formé par le démodulateur 1 et par les circuits associés qui viennent d'être décrits, on va montrer comment s'effectue l'identification du standard PAL ou NTSC reçu. On se reportera pour cela successivement aux figures 2 et 3.

La figure 2 illustre de façon très schématisée, la structure du signal vidéo composite correspondant au standard PAL, sur trois lignes successives. Ce signal vidéo composite 40 comprend, dans l'intervalle de retour ligne, une impulsion de synchronisation 41 suivie d'une salve d'identification du signal de chrominance 42. Le signal de démodulation IC1 produit par le démodulateur 1 prend une valeur alternativement positive et négative, au passage de chaque salve successive. En effet, le vecteur d'identification VM, dans le standard PAL (représenté au-dessus de chaque salve 42) prend une phase successivement de + et - t d'une ligne à la suivante, et sa projection sur l'axe V à 90° produit donc un signal successivement positif et négatif. La tension VC1 représentant l'intégration du signal IC1 reste donc égale à zéro et l'état logique du premier critère logique garde l'état zéro. Par ailleurs, le signal de sortie ICC de l'inverseur de polarité 31 prend une valeur positive au passage de chaque salve pour une certaine phase du signal à demi-fréquence ligne FL/2 et prend une valeur négative (ICC′) au passage de chaque salve pour un signal à demi-fréquence ligne FL/2′ de phase opposée. Comme le comparateur 35 compare la valeur de la tension VC2 par rapport au seuils VS2, VS3, on voit que le second critère logique C2 passe à l'état logique 1 quelle que soit la "phase" du signal à demi-fréquence ligne.

Si le signal reçu est du standard NTSC, le signal de démodulation IC1 produit par le démodulateur 1 garde une valeur nulle au passage de chaque salve, comme on peut le voir dans la figure 3. En effet, le vecteur d'identification VM, dans le standard NTSC, garde toujours une phase de 0°, pour toutes les lignes, et sa démodulation avec un signal de phase de 90° produit donc un signal nul (projection du vecteur VM sur l'axe V). Bien entendu, les deux critères logiques C1 et C2 prennent l'état logique 0, indépendamment de la "phase" du signal à demi-fréquence ligne FL/2.

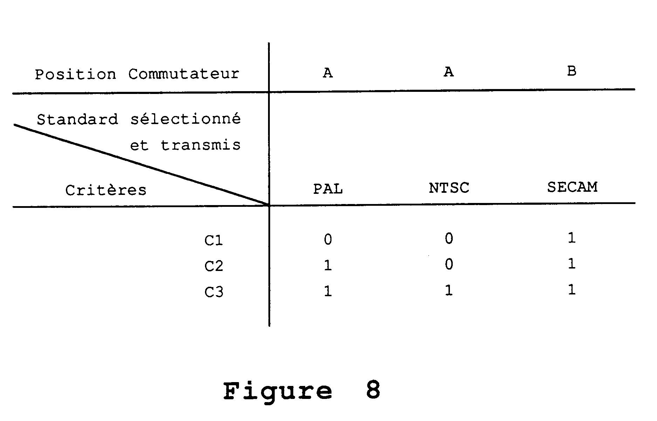

Les critères C1 et C2 ont donc des états définis dans le cas d'une réception de signaux PAL ou NTSC et prendront toujours ces états en présence de ces signaux. Ceux-ci sont rappelés dans le tableau de la figure 8.

Le circuit produisant les premier et second critères logiques C1 et C2 peut également être connecté à un démodulateur SECAM 2 dont la seconde entrée reçoit un signal correspondant à la fréquence de référence du rouge FOR du standard SECAM. La figure 4 correspond au cas où le signal de démodulation IC2 de sortie du démodulateur 2 est envoyé dans la ligne 11. Ce signal de démodulation IC2 prend une valeur positive au passage d'une salve sur deux, le premier critère logique C1 passe donc à l'etat logique 1. Pour une certaine "phase" du signal à demi-fréquence ligne FL/2, le signal ICC prend une valeur positive au passage d'une salve sur deux et, pour un signal à demi-fréquence ligne FL/2′ de phase opposée, le signal ICC′ qui en résulte prend une valeur négative au passage d'une salve sur deux. Dans les deux cas, le second critère logique C2 prend l'etat logique 1.

Pour pouvoir discriminer les standards PAL/NTSC et SECAM, on peut utiliser également les démodulateurs 3 et 4. La seconde entrée du démodulateur 3 reçoit le signal de la sous-porteuse régénéréé (SRG) phasée à 0° et la seconde entrée du démodulateur 4 reçoit un signal correspondant à la fréquence de référence du bleu FOB dans le standard SECAM. Le démodulateur 3 produit en sortie un signal de démodulation IC3 et le démodulateur 4 un signal de démodulation IC4. Le commutateur 8 permet de relier successivement les sorties des démodulateurs 3 ou 4 à une ligne 9. La ligne 9 est reliée à la masse par un condensateur 10 et à une tension de référence VREF par une résistance 11. La tension VC3 qui s'établit dans la ligne 9 correspond donc à l'intégration dans le temps du signal de démodulation envoyé dans cette ligne. La tension VC3 est comparée à une tension de seuil prédéterminée VS3 par un comparateur 12 dont la sortie produit un troisième critère logique C3.

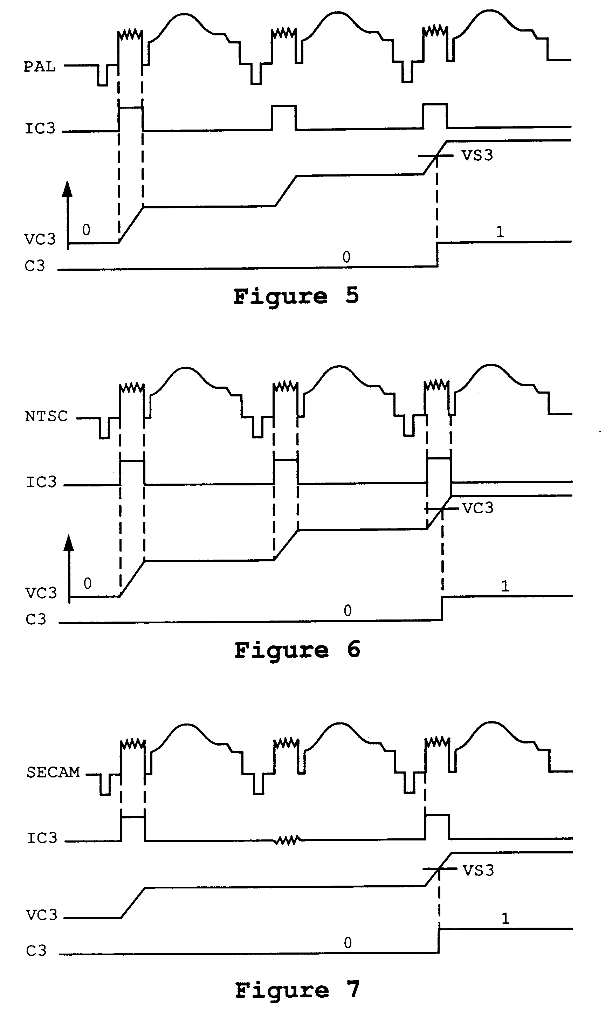

Ce montage permet de déterminer si le signal reçu par le téléviseur est soit du standard SECAM soit du standard PAL ou NTSC en effectuant une démodulation de la sous-porteuse par un signal de même fréquence. Le fait d'utiliser un signal de sous-porteuse régénérée phasée à 0° ne permet cependant pas de différencier le standard PAL du standard NTSC. Comme on peut le voir en figure 5, si le signal reçu est du standard PAL, le signal de démodulation IC3 en sortie du démodulateur 3 prend une valeur positive à chaque salve. Le troisième critère logique C3 passe donc à l'état logique 1. Il en est de même si le signal reçu est de standard NTSC, comme on peut le voir en figure 6. En effet, dans le standard PAL, l'un des vecteurs de modulation varie de + ou - 90° d'une ligne à la suivante, alors qu'il reste identique dans le standard NTSC. Par conséquent, la projection de ce vecteur de modulation sur l'axe U correspondant à la phase 0° conserve toujours le même signe, d'une ligne à la suivante, que l'on soit en standard PAL ou en standard NTSC. On peut donc utiliser le même démodulateur 3. On voit en figure 5 que, lorsque le signal reçu est du standard PAL, le signal de démodulation IC3 prend une valeur positive au passage de chaque salve, et qu'en conséquence le troisième critère logique C3 passe à l'état logique 1. On voit dans la figure 6 que, lorsque le signal reçu est du standard NTSC, le signal de démodulation IC3 prend pareillement une valeur positive au passage de chaque salve et que par conséquent le troisième critère logique C3 passe à l'état logique 1. Si l'on branche le démodulateur 4, et si le signal reçu est du standard SECAM, on voit que le signal de démodulation IC4 en sortie du démodulateur 4 prend une valeur positive une ligne sur deux et que par conséquent le troisième critère logique C3 passe à l'état logique 1.

On a vu précédemment que le démodulateur 1 permet d'identifier le standard NTSC par le fait que les critères C1 et C2 passent tous deux à l'état logique 0, qui correspond en fait à une absence du signal IC1. Cette identification n'est, en fait, pas sûre parce qu'elle peut correspondre aussi à un standard totalement différent, un signal insuffisant ou à toute autre défaillance. Cette identification du standard NTSC doit donc être confirmée à l'aide du démodulateur 1.

On a vu précédemment que le démodulateur 2 permettait d'identifier le standard SECAM, par le critère logique C3. Le démodulateur 4 permet de confirmer l'identification du standard SECAM comme on peut le voir en figure 7.

L'ensemble du circuit fonctionne de la manière suivante. Dans une première phase, les commutateurs 8 et 10 prennent simultanément une position A pour connecter les démodulateurs 3 et 1. Dans une seconde séquence, les commutateurs 8 et 10 prennent une position B pour connecter les démodulateurs 4 et 2. On saisit pour chacune de ces deux séquences les états logiques pris par les critères logiques C1, C2 et C3. Le tableau de la figure 8 regroupe les états logiques pris simultanément par les critères logiques C1, C2 et C3 en fonction du standard reçu. Si, pour une première séquence, correspondant à la position A des deux commutateurs, les critères logiques C1, C2 et C3 prennent respectivement les états logiques 0, 1, 1, le standard reçu est PAL. Si, les critères logiques C1, C2 et C3 prennent respectivement les états logiques 0, 0, 1, le standard reçu est NTSC et si, dans une deuxième séquence correspondant à la position B des commutateurs, les critères logiques C1, C2 et C3 prennent respectivement les états logiques 1, 1, 1, le standard reçu est SECAM.

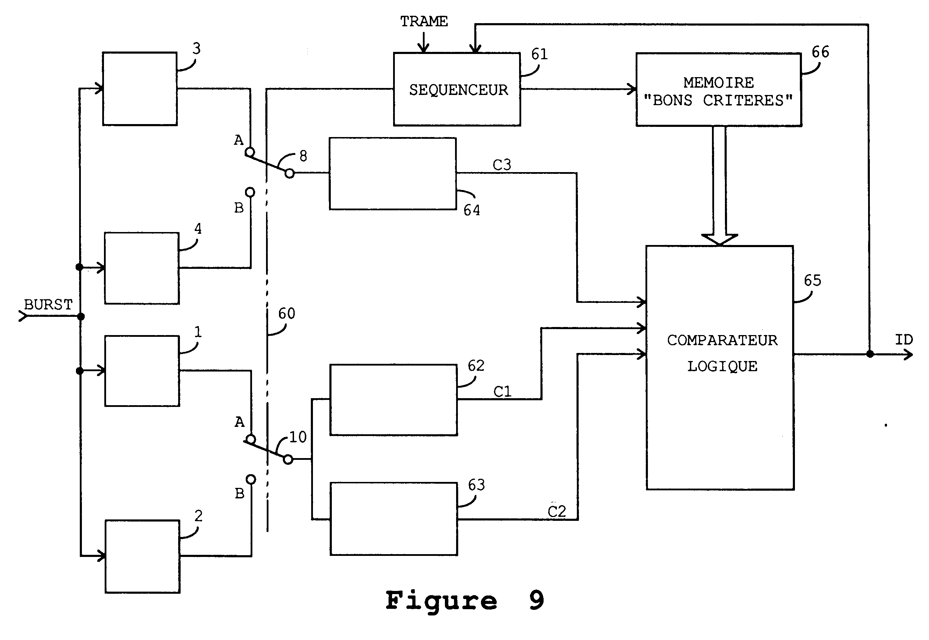

La figure 9 représente un schéma général d'un dispositif permettant la mise en oeuvre du procédé selon l'invention. On retrouve d'une façon simplifiée, les quatre démodulateurs 1 à 4, les deux commutateurs 8 et 10 munis d'un dispositif de commande de commutation simultanée représenté schématiquement par un trait mixte 60, actionné par un séquenceur 61. L'ensemble électronique 62 produit le premier critère logique C1, l'ensemble 63 produit le deuxième critère logique C2 et l'ensemble 64 produit le troisième logique C3. Les signaux logiques correspondant aux critères logiques C1, C2 et C3 sont envoyés dans un circuit de comparateur logique 65. Le circuit 65 compare l'ensemble des critères logiques C1, C2 et C3 qui lui parviennent simultanément, en fonction de la position A ou B simultanée des commutateurs 8 et 10, aux critères logiques correspondant à un des trois standards possibles mémorisés de façon permanente dans une mémoire 66. Le séquenceur 61 reçoit un signal synchronisation trame pour effectuer au début d'une image le processus de commande des différents moyens constituant ce dispositif, en particulier les commutateurs 8 et 10 actionnés simultanément, le comparateur logique 65 et la mémoire 66. Le comparateur logique 65 produit un signal de sortie ID d'identification d'un des trois standards pouvant être reçu par le téléviseur couleur.

Le temps nécessaire à l'identification d'un standard parmi les trois standards PAL, NTSC et SECAM est relativement court. En effet, il suffit que les commutateurs prennent successivement les deux positions A, B en restant dans chacune de ces positions pendant le temps nécessaire au passage d'une trame environ. Le temps maximum d'identification correspond donc à environ trois trames.

Si l'on utilise de la sorte les trois critères logiques C1, C2 et C3, l'identification des trois standards PAL, NTSC et SECAM est obtenue dans tous les cas par deux voies différentes, correspondant à deux démodulateurs différents, ce qui permet une identification très fiable, et cela, sans "mise en phase", préalable du signal à demi-fréquence ligne.

## Revendications

1. Procédé d'identification automatique d'un standard de télévision couleur PAL ou NTSC, caractérisé en ce qu'il comprend les étapes suivantes :
- effectuer la démodulation des salves du signal de chrominance par la sous-porteuse régénérée phasée à 90°, par rapport auxdites salves, pour produire un premier signal de démodulation (IC1) ;
- effectuer la démodulation des salves du signal de chrominance avec un signal à la fréquence de référence d'une des couleurs (FOR) du standard SECAM, pour produire un deuxième signal de démodulation (IC2) ;
- produire une première tension (VC1) en intégrant dans le temps le premier signal de démodulation (IC1), comparer cette première tension à un premier seuil prédéterminé (VS1) et produire un premier critère logique (C1) prenant un premier état logique (0) si la première tension (VC1) est inférieure au premier seuil (VS1) et l'autre état logique (1) dans le cas contraire, appliquer en parallèle le premier signal de démodulation (IC1) à l'entrée d'un inverseur de polarité commuté à la cadence d'un signal non phasé à la demi-fréquence ligne (FL/2), produire une deuxième tension (VC2) en intégrant dans le temps le signal de sortie (ICC) de l'inverseur de polarité (31), comparer la valeur absolue de la deuxième tension (VC2) à un deuxième seuil prédéterminé (VS2) et produire un deuxième critère logique (C2) prenant le premier état logique (0) si la valeur absolue de la deuxième tension est inférieure au deuxième seuil et l'autre état logique (1) dans le cas contraire ;
- produire de la même façon mais à partir du deuxième signal de démodulation (IC2) le premier critère logique (C1) et le deuxième critère logique (C2) ; et
- identifier le standard reçu comme étant le standard PAL si, à partir du premier signal de démodulation (IC1), les premier et deuxième critères logiques (C1 et C2) prennent respectivement le premier (0) et l'autre état logique (1), identifier le standard reçu comme étant le standard NTSC si, à partir du premier signal de démodulation (IC1), les premier et deuxième critères logiques (C1 et C2) prennent tous deux le premier état logique (0) et identifier le standard reçu comme étant le standard SECAM si, à partir du deuxième signal de démodulation (IC2), les premier et deuxième critères logiques (C1 et C2) prennent tous deux l'autre état logique (1).

2. Procédé d'identification automatique d'un standard de télévision couleur selon la revendication 1, caractérisé en ce qu'il comprend aussi les étapes suivantes :
- effectuer la démodulation des salves du signal de chrominance par la sous-porteuse régénérée phasée à 0°, pour produire un troisième signal de démodulation (IC3) ;
- effectuer la démodulation des salves du signal de chrominance par un signal à la fréquence de référence de l'autre couleur du standard SECAM, pour produire un quatrième signal de démodulation (IC4) ;
- produire à partir du troisième signal de démodulation (IC3) une troisième tension (VC3) résultant de l'intégration dans le temps du troisième signal de démodulation, comparer cette troisième tension (VC3) à un troisième seuil prédéterminé (VS3) et produire un troisième critère logique (C3) prenant le premier état logique (0) si la troisième tension (VC3) est inférieure au troisième seuil (VS3) et l'autre état logique (1) dans le cas contraire ;
- produire de la même façon mais à partir du quatrième signal de démodulation le troisième critère logique (C3) ; et
- identifier le standard reçu comme étant le standard PAL ou NTSC si, à partir du troisième signal de démodulation (IC3), le troisième critère logique prend l'autre état logique (1) et identifier le standard reçu comme étant le standard SECAM si, à partir du quatrième signal de démodulation (IC4) le troisième critère logique prend l'autre état logique (1).

3. Procédé d'identification automatique d'un standard de télévision couleur selon la revendication 2, caractérisé en ce qu'il comprend les étapes suivantes :
- dans un premier temps, produire les trois critères logiques (C1, C2, C3) à partir des premier et troisième signaux de démodulation (IC1, IC3), identifier le standard reçu comme étant le standard PAL si les premier, deuxième et troisième critères logiques prennent respectivement le premier état logique (0), l'autre état logique (1) et l'autre état logique (1) et identifier le standard reçu comme le standard NTSC si les premier, deuxième et troisième critères logiques prennent respectivement le premier état logique (0), le premier état logique (0) et l'autre état logique (1) ; et
- dans un deuxième temps, produire les trois critères logiques (C1, C2, C3) à partir des deuxième et quatrième signaux de démodulation (IC2, IC4) et identifier le standard reçu comme étant le standard SECAM si les premier, deuxième et troisième critères logiques prennent tous les trois l'autre état logique (1).

## Patentansprüche

1. Verfahren zum automatischen Identifizieren einer PAL- oder NTSC-Farbfernsehnorm, **gekennzeichnet** durch die folgenden Verfahrensschritte:
- Demodulieren der Bursts des Chrominanzsignales mit dem wiedergewonnenen Hilfsträger, welcher bezüglich der Bursts um 90° phasenverschoben ist, um ein erstes Demodulationssignal (IC1) zu erzeugen,
- Demodulieren der Bursts des Chrominanzsignales mit einem Signal bei der Bezugsfrequenz einer der Farben (FOR) der SECAM-Norm, um eine zweites Demodulationssignal (IC2) zu erzeugen,
- Erzeugen einer ersten Spannung (VC1) durch zeitliche Integration des ersten Demodulationssignales, Vergleichen dieser ersten Spannung mit einem ersten vorgegebenen Schwellwert (VS1) und Erzeugen eines ersten Logikkriteriums (C1), welches einen ersten Logikzustand (0) annimmt, wenn die erste Spannung (VC1) geringer ist als der erste Schwellwert (VS1), und ansonsten den anderen Logikzustand (1) annimmt; gleichzeitiges Anlegen des ersten Demodulationssignales (IC1) an den Eingang eines Polaritätsinverters, welcher nach Maßgabe des Taktes eines Signales gesteuert wird, welches zur halben Zeilenfrequenz (FL/2) nicht in Phase ist, Erzeugen einer zweiten Spannung (VC2) durch zeitliche Integration des Ausgangssignals (ICC) des Polaritätsinverters (31), Vergleichen des Absolutwertes der zweiten Spannung (VC2) mit einem zweiten vorgegebenen Schwellwert (VS2) und Erzeugen eines zweiten Logikkriteriums (C2), welches den ersten Logikzustand (0) annimmt, wenn der Absolutwert der zweiten Spannung geringer ist als der zweite Schwellwert, und ansonsten den anderen Logikzustand (1) annimmt,
- Erzeugen des ersten Logikkriteriums (C1) und des zweiten Logikkriteriums (C2) auf dieselbe Weise, jedoch ausgehend vom zweiten Demodulationssignal (C2), und
- Identifizieren der empfangenen Norm als die PAL-Norm, wenn ausgehend von dem ersten Demodulationssignal (IC1) das erste und das zweite Logikkriterium (C1 und C2) den ersten (0) bzw. den anderen Logikzustand (1) annehmen, Identifizieren der empfangenen Norm als die NTSC-Norm, wenn ausgehend von dem ersten Demodulationssignal (IC1) das erste und das zweite Logikkriterium (C1 und C2) beide den ersten Logikzustand (0) annehmen, und Identifizieren der empfangenen Norm als die SECAM-Norm, wenn ausgehend von dem zweiten Demodulationssignal (IC2) das erste und das zweite Logikkriterium (C1 und C2) beide den anderen Logikzustand (1) annehmen.

2. Verfahren zum automatischen Identifizieren einer Farb fernsehnorm nach Anspruch 1, **gekennzeichnet** durch die weiteren Verfahrensschritte:
- Demodulieren der Bursts des Chrominanzsignales mit einem wiedergewonnenen Hilfsträger, welcher um 0° phasenverschoben ist, um ein drittes Demodulationssignal (IC3) zu erzeugen,
- Demodulieren der Bursts des Chrominanzsignales mit einem Signal bei der Bezugsfrequenz der anderen Farbe der SECAM-Norm, um ein viertes Demodulationssignal (IC4) zu erzeugen,
- Erzeugen einer dritten Spannung (VC3) ausgehend von dem dritten Demodulationssignal (IC3), welches sich aus der zeitlichen Integration des dritten Demodulationssignales ergibt, Vergleichen dieser dritten Spannung (VC3) mit einem dritten vorgegebenen Schwellwert (VS3) und Vorsehen eines dritten Logikkriteriums (C3), welches den ersten Logikzustand (0) annimmt, wenn die dritte Spannung (VC3) geringer ist als der dritte Schwellwert (VS3), und ansonsten den anderen Logikzustand (1) annimmt,
- Erzeugen des dritten Logikkriteriums (C3) auf dieselbe Weise, jedoch ausgehend vom vierten Demodulationssignal, und
- Identifizieren der empfangenen Norm als die PAL- oder die NTSC-Norm, wenn ausgehend vom dritten Demodulationssignal (IC3) das dritte Logikkriterium den anderen Logikzustand (1) annimmt, und Identifizieren der empfangenen Norm als die SECAM-Norm, wenn ausgehend von dem vierten Demodulationssignal (IC4) das dritte Logikkriterium den anderen Logikzustand (1) annimmt.

3. Verfahren zum automatischen Identifizieren einer Farb fernsehnorm nach Anspruch 2, **gekennzeichnet**, durch die folgenden Verfahensschritte:
- erstens, Erzeugen der drei Logikkriterien (C1, C2, C3) ausgehend von dem ersten und dem dritten Demodulationssignal (IC1, IC3), Identifizieren der empfangenen Norm als die PAL-Norm, wenn das erste, das zweite und das dritte Logikkriterium jeweils den ersten Logikzustand (0), den anderen Logikzustand (1) und den anderen Logikzustand (1) annehmen, und Identifizieren der empfangenen Norm als die NTSC-Norm, wenn das erste, das zweite und das dritte Logikkriterium jeweils den ersten Logikzustand (0), den ersten Logikzustand (0) und den anderen Logikzustand (1) annehmen und
- zweitens, Erzeugen der drei Logikkriterien (C1, C2, C3) ausgehend von dem zweiten und dem vierten Demodulationssignal (IC2, IC4) und Identifizieren der empfangenen Norm als die SECAM-Norm, wenn das erste, das zweite und das dritte Logikkriterium alle den anderen Logikzustand (1) annehmen.

## Claims

1. A method for automatically identifying the PAL or NTSC color TV standard characterized in that it comprises the following steps:
- demodulating the chrominance signal bursts with the regenerated sub-carrier, 90°-phased with respect to said bursts, for providing a first demodulation signal (IC1);
- demodulating the chrominance signal bursts with a signal at the reference frequency of one of the colors (FOR) of the SECAM standard, for providing a second demodulation signal (IC2);
- providing a first voltage (VC1) by integrating in time the first demodulation signal (IC1), comparing this first voltage with a first predetermined threshold (VS1) and providing a first logic criterion (C1) being at a first logic state (0) if the first voltage (VC1) is lower than the first threshold (VS1) and at the other logic state (1) otherwise; simultaneously applying the first demodulation signal (IC1) to the input of a polarity inverter switched according to the rate of a non-half line-frequency phased signal (FL/2), providing a second voltage (VC2) by integrating in time the output signal (ICC) of the polarity inverter (31), comparing the absolute value of the second voltage (V2) with a second predetermined threshold (VS2) and providing a second logic criterion (C2) at the first logic state (0) if the absolute value of the second voltage is lower than the second threshold and at the other logic state (1) otherwise;
- similarly providing, but from the second demodulation signal (IC2), the first logic criterion (C1) and the second logic criterion (C2); and
- identifying the standard received as being the PAL standard if, from the first demodulation signal (IC1), the first and second logic criteria (C1 and C2) are at said first (0) and the other logic state (1), respectively, identifying the received standard as being the NTSC standard if, from the first demodulation signal (IC1), said first and second logic criteria (C1 and C2) are both at the first logic state (0) and identifying the received standard as being the SECAM standard if, from the second demodulation signal (IC2), said first and second logic criteria (C1 and C2) are both at the other logic state (1).

2. A method for automatically identifying the standard of a color TV set according to claim 1, characterized in that it further comprises the following steps:
- demodulating the chrominance signal bursts with a regenerated 0°-phased sub-carrier for providing a third demodulation signal (IC3);
- demodulating the chrominance signal bursts with a signal at the reference frequency of the other SECAM color standard, for providing a fourth demodulation signal (IC4);
- providing from said third demodulation signal (IC3) a third voltage (VC3) resulting from the integration in time of the third demodulation signal, comparing this third voltage (VC3) with a third predetermined threshold (VS3) and providing a third logic criterion (C3) at said first logic state (0) if said third voltage (VC3) is lower than the third threshold (VS3) and the other state (1), otherwise;
- similarly providing, but from the fourth demodulation signal, the third logic criterion (C3); and
- identifying the standard received as being the PAL or NTSC standard if, from said third demodulation signal (IC3), the third logic criterion is at the other logic state (1) and identifying the standard received as being the SECAM standard if, from the fourth demodulation signal (IC4), the third logic criterion is at the other logic state (1).

3. A method for automatically identifying the standard of a color TV set according to claim 2, characterized in that it comprises the following steps:
- firstly, providing said three logic criteria (C1, C2, C3) from said first and third demodulation signals (IC1, IC3), identifying the standard received as being the PAL standard if the first, second and third logic criteria are respectively at said first logic state (0), said other logic state (1) and said other logic state (1) and identifying the standard received as being the NTSC standard if said first, second and third logic criteria are respectively at said first logic state (0), said first logic state (0) and said other logic state (1); and,
- secondly, providing said three logic criteria (C1, C2, C3) from the second and fourth demodulation signals (IC2, IC4) and identifying the standard received as being the SECAM standard if the first, second and third logic criteria are all at logic state (1).
